# EUROPEAN PATENT SPECIFICATION

(11) **EP 4 300 683 B1**
(45) Date of publication and mention of the grant of the patent: **26.11.2025**
(21) Application number: 22759589.9
(22) Date of filing: 21.02.2022
(51) Int. Cl.: H01M 50/242, H01M 10/613, H01M 10/655, H01M 10/6554, H01M 50/291

(54) **BATTERY PACK**
BATTERIEPACK
BLOC-BATTERIE

(30) Priority: 25.02.2021 JP 2021028717
(43) Date of publication of application: 03.01.2024
(73) Proprietor: HONDA MOTOR CO., LTD., Tokyo 105-8404 (JP)
(72) Inventor: TABUCHI, Yuya, Wako-shi, Saitama 351-0193 (JP); ITO, Keiichi, Wako-shi, Saitama 351-0193 (JP)
(74) Representative: Weickmann & Weickmann PartmbB
(86) International application number: PCT/JP2022/006999
(87) International publication number: WO 2022/181553

(56) References cited:
- WO-A1-2019/225701
- WO-A1-2019/225701
- JP-A- 2013 168 355
- JP-A- 2013 168 355
- JP-A- 2015 130 306
- US-A1- 2010 221 591

## Description

### TECHNICAL FIELD

The present invention relates to a core pack including a cell holder that holds cells. The present invention also relates to a battery pack including a casing that houses the core pack.

### BACKGROUND ART

WO 2019/230879 A1 discloses a battery pack including a core pack ("battery core pack" in WO 2019/230879 A1) and a casing. The core pack has a cell holder holding a plurality of unit cells. The core pack is housed in the casing. The core pack may include a heat dissipation sheet shown in FIG. 7 of International Publication No. WO 2019/230879 A1, an insulating sheet, or the like. These sheets are interposed between the cell holder and the casing.

The casing has a substantially rectangular parallelepiped shape as shown particularly in FIGS. 1, 2, and 4 of WO 2019/230879 A1. The four side surfaces of the casing are substantially flat. A plurality of grooves are formed on the inner wall of the casing. Liquid such as water is guided by the grooves. Between adjacent grooves, protruding portions are provided that are raised relative to the grooves. As shown in FIG. 5 of WO 2019/230879 A1, the protruding portions have a substantially square shape in plan view and extends toward the core pack. In WO 2019/22 5701 A and JP 2013 168 355A the protruding portions have a square or rectangular cross section, also.

### SUMMARY OF THE INVENTION

The reason why the heat dissipation sheet is housed in the casing is to quickly dissipate heat generated in the core pack to the outside of the casing when the unit cells are charged. There is a need for more rapid dissipation and more efficient removal of heat.

It is a primary object of the present invention to provide a battery pack capable of efficiently removing heat from a core pack.

To achieve this object, the invention provides a battery pack according to claim 1.

In the present invention, the inner wall of the casing is provided with the protruding portion protruding toward the outer wall of the cell holder housed in the casing. The protruding portion abuts the core pack including the cell holder. Therefore, when the core pack is heated, the heat is quickly transferred to the casing via the protruding portion. In other words, the heat of the core pack is quickly absorbed by the protruding portion. Therefore, the heat can be quickly removed from the core pack.

In addition, the protruding portion functions as a rib portion that increases the rigidity of the casing. For this reason, the rigidity of the casing is ensured and thus the casing hardly deforms.

### BRIEF DESCRIPTION OF THE DRAWINGS

FIG. 1 is a schematic overall perspective view of a battery pack according to an embodiment of the present invention;
FIG. 2 is a schematic cross-sectional view of the battery pack taken along a direction orthogonal to the longitudinal direction;
FIG. 3 is a schematic overall perspective view of a casing body constituting the battery pack;
FIG. 4 is a schematic front view of an inner surface side of a side wall of the casing body; and
FIG. 5 is an enlarged view of a portion surrounded by a circle in FIG. 2.

### DETAILED DESCRIPTION OF THE INVENTION

Hereinafter, preferred embodiments of a battery pack according to the present invention will be described in detail with reference to the accompanying drawings. In the following description, "down" and "up" correspond to the lower side and the upper side of each drawing. In addition, regarding a casing 18, a side wall portion facing the arch-shaped portion 24 is referred to as a "front surface portion", a side wall portion on a back surface thereof is referred to as a "back surface portion", and side wall portions connected to the front surface portion and the back surface portion are referred to as a "left side portion" and a "right side portion". However, these directions are provided only to simplify the explanation and facilitate understanding. These directions do not necessarily indicate direction or postures while the battery pack is discharged or charged.

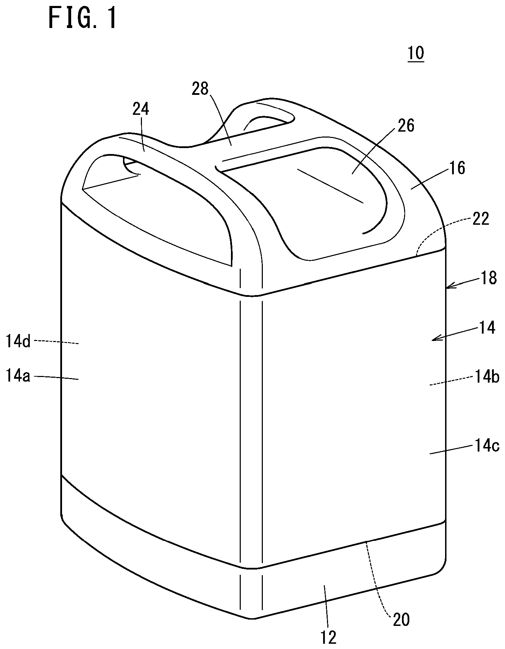

FIG. 1 is a schematic overall perspective view of a battery pack 10 according to the present embodiment. The battery pack 10 includes a bottom cover 12 and a casing 18. The casing 18 includes an elongated casing body 14 and a top cover 16. The casing body 14 is formed of a hollow body having a substantially quadrangular tubular shape with both ends in the longitudinal direction (height direction) opened. Both ends of the casing body 14 in the height direction are a lower end and an upper end in FIG. 1. The bottom cover 12 closes the opening at a lower end of the casing body 14. The top cover 16 closes the opening at the upper end of the casing body 14.

The top cover 16 is provided with an arch-shaped portion 24 and a tab-shaped portion 26 projecting from the upper surface. A grip bar 28 is provided from the arch-shaped portion 24 to the tab-shaped portion 26. In a plan view in which the battery pack 10 is viewed from the direction of the top cover 16, the tab-shaped portion 26, the grip bar 28, and the arch-shaped portion 24 form a substantially H-shape.

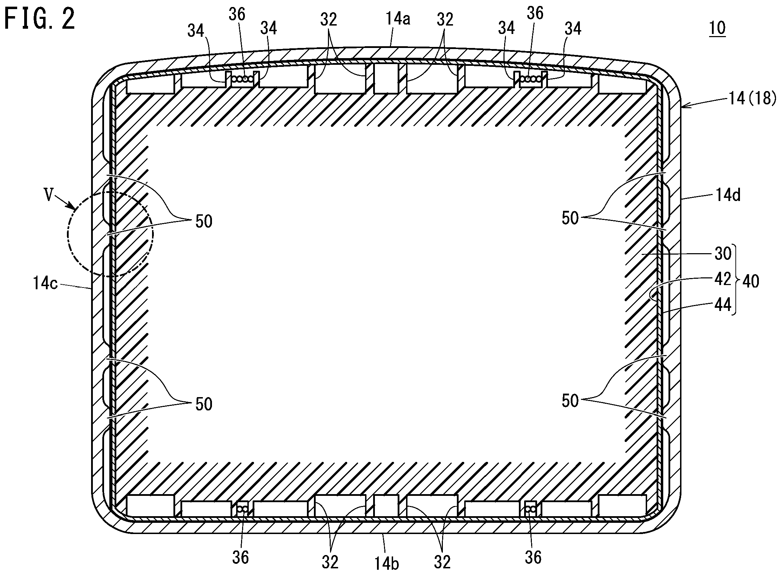

As shown in FIG. 2, a cell holder 30 holding a plurality of unit cells (cells) is housed in the casing 18. The structure of the unit cells and of the cell holder 30 is known as described in detail in, for example, aforementioned WO 2019/230879 A1 (see in particular FIGS. 2, 6, and 7) and will therefore not be described or illustrated in detail.

Extension portions 32 are provided on outer walls of side surfaces of the cell holder 30 facing the front surface portion 14a and the back surface portion 14b of the casing body 14. The extension portions 32 protrude toward the inner wall of the casing body 14. Part of the extension portions 32 abuts each inner wall of the front surface portion 14a and the back surface portion 14b of the casing body 14. Because of this abutment, the cell holder 30 is positioned with respect to the casing 18.

Further, the cell holder 30 is provided with a hook portion 34. The hook portion 34 does not abut the front surface portion 14a. A harness 36 is hooked on the hook portion 34. The harness 36 connects a connector and a bus bar electrically connected to an electrode of the unit cell. The hook portion 34 may or may not abut the inside wall of the back surface portion 14b.

In the present embodiment, the core pack 40 includes the cell holder 30, a heat transfer sheet 42 (heat dissipation sheet), and an insulating sheet 44. The cell holder 30, the heat transfer sheet 42, and the insulating sheet 44 are arranged in this order from the inner side to the outer side of the casing 18. That is, the cell holder 30 is surrounded by the heat transfer sheet 42. The heat transfer sheet 42 is surrounded by the insulating sheet 44. The heat transfer sheet 42 and the insulating sheet 44 are made of resin or the like, for example. The heat transfer sheet 42 and the insulating sheet 44 are soft and exhibit a certain degree of flexibility. However, the heat transfer sheet 42 is set thicker than the insulating sheet 44. Therefore, the rigidity of the heat transfer sheet 42 is greater than the rigidity of the insulating sheet 44.

The heat transfer sheet 42 and the insulating sheet 44 are interposed between the cell holder 30 and the casing 18. Therefore, the extension portion 32 abuts the front surface portion 14a and the back surface portion 14b of the casing body 14 via the heat transfer sheet 42 and the insulating sheet 44. Similarly, the hook portion 34 abuts the back surface portion 14b in the same manner.

The front surface portion 14a of the casing body 14 facing the arch-shaped portion 24 curves along the widthwise direction. The widthwise direction is a direction orthogonal to the longitudinal direction. That is, as shown in FIG. 2, the front surface portion 14a gradually bulges as it goes from a widthwise end portion to a widthwise intermediate portion. For this reason, the front surface portion 14a is rounded. In this way, the front surface portion 14a bulges most outward at the widthwise-intermediate portion. Thus, the appearance (design) of the battery pack 10 improves. The front surfaces of the bottom cover 12 and the top cover 16 may be not curved. However, it is preferable that the front surfaces of the bottom cover 12 and the top cover 16 curve in accordance with the front surface portion 14a. In this case, the design of the battery pack 10 further improves.

Since the front surface portion 14a curves as described above, the protruding lengths of the extension portions 32 facing the inner wall of the front surface portion 14a are different at the widthwise end portion and at the widthwise intermediate portion. Specifically, the protruding length of the extension portion 32 positioned at the widthwise end portion is smaller. On the contrary, the protruding length of the extension portion 32 positioned at the widthwise intermediate portion is larger. On the other hand, protruding distal end positions of the extension portion 32 and the hook portion 34 facing the inner surface of the back surface portion 14b are substantially the same.

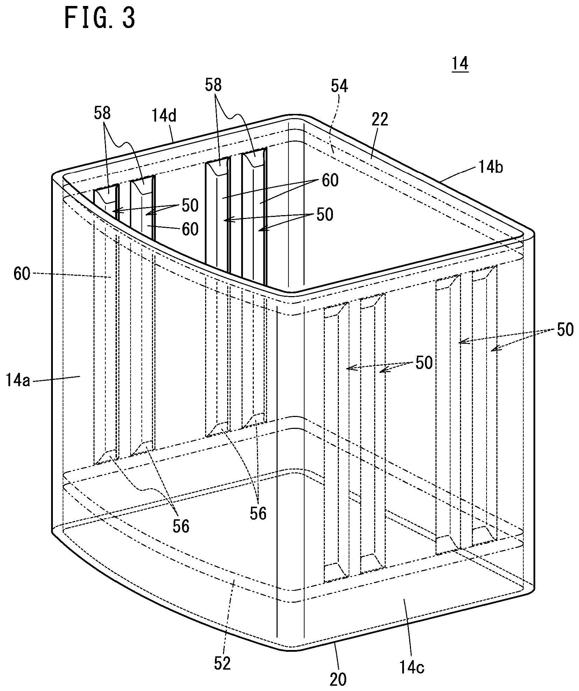

The left side portion 14c and the right side portion 14d of the casing body 14 are formed to be substantially flat as the back surface portion 14b. As shown in FIGS. 2 and 3, trapezoidal protruding portions 50 are provided, as a protruding portion, on the inner walls of the left side portion 14c and the right side portion 14d. The trapezoidal protruding portions 50 protrude toward the cell holder 30 or the core pack 40. In this case, the trapezoidal protruding portions 50 extend along the up-down direction that is the longitudinal direction of the casing body 14. However, the longitudinal dimension of the trapezoidal protruding portions 50 is smaller than the longitudinal dimension of the casing body 14.

One end portion in the longitudinal direction and another end portion in the longitudinal direction of the trapezoidal protruding portion 50 are the lower end and the upper end of the trapezoidal protruding portion 50, respectively. One end portion and the other end portion in the longitudinal direction of the casing body 14 are a lower opening 20 and an upper opening 22 of the casing body 14, respectively. That is, one end portion in the longitudinal direction of the trapezoidal protruding portion 50 and one end portion in the longitudinal direction of the casing body 14 are end portions in the same direction. The same applies to the other end portion. The lower end of the trapezoidal protruding portion 50 is located above the lower opening 20 of the casing body 14. The upper end of the trapezoidal protruding portion 50 is located below the upper opening 22 of the casing body 14. That is, one end portion and the other end portion in the longitudinal direction of the trapezoidal protruding portion 50 are slightly closer to the center in the longitudinal direction than the openings of the casing body 14 are.

For example, a lower seal member 52 is disposed between the lower opening 20 and the lower end of the trapezoidal protruding portion 50. Similarly, for example, an upper seal member 54 is disposed between the upper end of the trapezoidal protruding portion 50 and the upper opening 22. In this way, one end portion and the other end portion in the longitudinal direction of the trapezoidal protruding portion 50 are separated from one end portion and the other end portion in the longitudinal direction of the casing body 14. Thus, an internal space capable of accommodating the seal members 52, 54 or the like is formed inside the casing 18.

No irregularities are formed on the inner wall of the casing body 14 between the lower opening 20 and the lower end of the trapezoidal protruding portion 50 and between the upper end of the trapezoidal protruding portion 50 and the upper opening 22. Therefore, the lower seal member 52 and the upper seal member 54 can be brought into close contact with the inner wall of the casing body 14. Thus, the sealing performance is ensured.

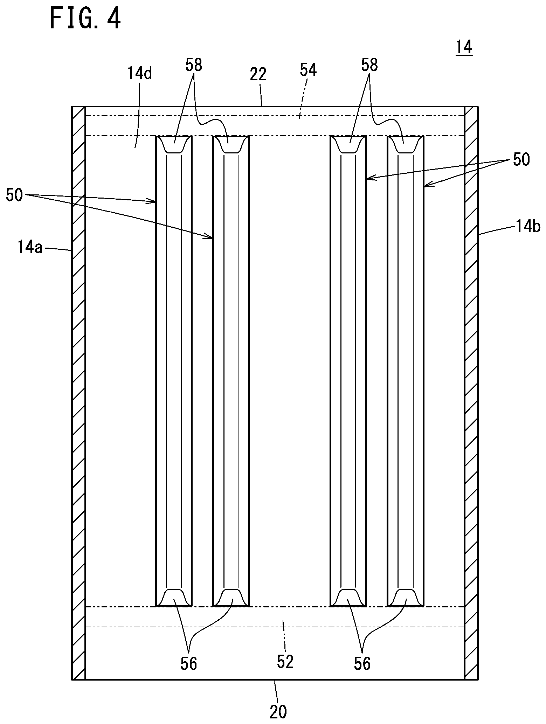

As shown in FIGS. 3 and 4, the lower end of the trapezoidal protruding portion 50 rises as it approaches the core pack 40. In other words, the lower end surface of the trapezoidal protruding portion 50 is an upward inclining surface 56 toward the upper end, which is the other end portion. On the other hand, the upper end of the trapezoidal protruding portion 50 is a downwardly inclining surface 58 toward the lower end, which is one end portion as it approaches the core pack 40.

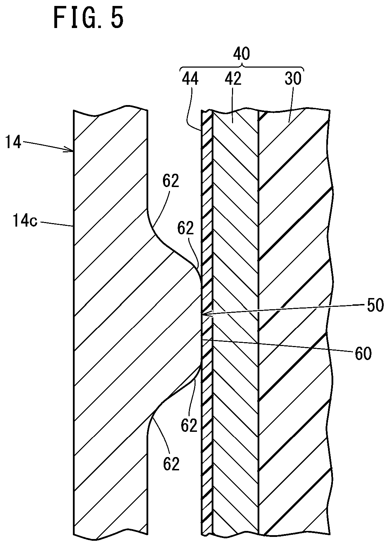

FIG. 5 is an enlarged view of a principal part cut along a portion V surrounded by the circle in FIG. 2. In other words, FIG. 5 is an enlarged view of a principal part when the casing body 14 is cut along the widthwise direction (direction from the front surface portion 14a toward the back surface portion 14b) orthogonal to the longitudinal direction. As shown in FIG. 5, the width of the trapezoidal protruding portion 50 gradually decreases as it approaches the core pack 40. That is, the trapezoidal protruding portion 50 becomes wider as it is further away from the core pack 40 and approaches the inner wall of the left side portion 14c or the right side portion 14d.

Further, the protruding tip of the trapezoidal protruding portion 50, the narrowest part, is formed as a flat surface 60 substantially parallel to the longitudinal direction of the left side portion 14c and the right side portion 14d. The flat surface 60 abuts the insulating sheet 44, the outermost part of the core pack 40. The corner portions of the protruding tip is formed as fillets. Therefore, the corner portion is called a curving portion 62. Similarly, the corner portions of the skirt portions where the trapezoidal protruding portion 50 is continuous with the inner wall of the left side portion 14c or the right side portion 14d are formed as fillets. That is, these corner portions are also called the curving portions 62. All the curving portions 62 have a smooth surface on which no ridge line is formed.

The battery pack 10 according to the present embodiment is basically configured as described above. Next, effects of the battery pack 10 will be described.

First, the casing body 14 provided with the trapezoidal protruding portion 50 on the inner wall is manufactured by, for example, performing extrusion molding on a plate material made of aluminum alloy and suchlike. In the present embodiment, all corner portions of the trapezoidal protruding portion 50 are the curving portions 62. In this case, it is easier to release the casing body 14 than when the corner portion is not the curving portion 62. Therefore, the load on the molding die reduces.

When the battery pack 10 is assembled, the outside of the cell holder 30 is surrounded by the heat transfer sheet 42. Thereafter, the outer side of the heat transfer sheet 42 is surrounded by the insulating sheet 44. Separately, the lower opening 20 of the casing body 14 is closed by the bottom cover 12.

Next, the lower seal member 52 is housed in the casing body 14. The lower opening 20 is closed by the bottom cover 12. Thereafter, the core pack 40 obtained as described above is inserted into the casing body 14. At this time, the downward inclining surface 58 serves as a guide for the core pack 40. Here, it is expected that the insulating sheet 44, the outermost part of the core pack 40, will abut the upper end, the corner portions, or the like of the trapezoidal protruding portion 50.

The upper end of the trapezoidal protruding portion 50 is formed as the downward inclining surface 58 as described above. The corner portions of the trapezoidal protruding portion 50 are curving portions 62, which are rounded. Therefore, a sharp portion is prevented from coming into contact with or being caught by the insulating sheet 44 or the heat transfer sheet 42. Therefore, the insulating sheet 44 or the heat transfer sheet 42 is prevented from being damaged or broken.

While the core pack 40 is being inserted into the casing body 14, the insulating sheet 44 comes into sliding contact with the flat surface 60, which is the protruding tip of the trapezoidal protruding portion 50. As described above, since the corner portions of the trapezoidal protruding portion 50 is the curving portion 62, the insulating sheet 44 is prevented from being caught by the corner portions during the sliding contact. Further, since the protruding tip of the trapezoidal protruding portion 50 is the flat surface 60, the insulating sheet 44 is prevented from being caught by the protruding tip. Therefore, the insulating sheet 44 or the heat transfer sheet 42 is prevented from being damaged or broken not only at the start of insertion of the core pack 40 but also in the middle of the insertion.

When the core pack 40 has been inserted to a predetermined depth, the core pack 40 is positioned and fixed in the casing body 14. Thereafter, the upper seal member 54 is housed in the casing body 14. Further, the upper opening 22 is closed by the top cover 16, and the top cover 16 is coupled to the casing body 14. In this way, the battery pack 10 is obtained. The lower seal member 52 seals between the bottom cover 12 and the casing body 14. The upper seal member 54 seals between the casing body 14 and the top cover 16.

As shown in FIG. 1, the front surface portion 14a of the casing body 14 is formed as a curving wall portion. Therefore, the design of the battery pack 10 improves. That is, the appearance of the battery pack 10 improves.

In the casing 18, the flat surface 60 of the trapezoidal protruding portion 50 is in contact with the cell holder 30 via the insulating sheet 44 and the heat transfer sheet 42. In this state, the battery pack 10 is electrically connected to an external device. The battery pack 10 supplies power to the external device. In other words, the battery pack 10 discharges. At this time, for example, the battery pack 10 is stored in a battery pack storage portion of the external device in an upright posture in which the longitudinal direction extends along the vertical direction. Alternatively, the battery pack 10 may take an inclined posture in which the longitudinal direction of the battery pack 10 inclines relative to the vertical direction. The battery pack 10 may be in a lying posture in which the longitudinal direction of the battery pack 10 extends along the horizontal direction.

The battery pack 10 whose remaining capacity has decreased is taken out from the battery pack storage portion of the external device. The battery pack 10 is then stored in a battery pack storage portion of a charging device. Similarly to the above, in this case, the battery pack 10 takes any one of the standing posture, the inclined posture, or the lying posture.

When the battery pack 10 is removed from the battery pack storage portion or when the battery pack 10 is stored in the battery pack storage portion in this way, it is expected that the casing 18, particularly the casing body 14, will come into contact with objects. However, the trapezoidal protruding portion 50 is provided on the inner wall of the casing body 14. Since the trapezoidal protruding portion 50 serves as a rib portion, the rigidity of the casing body 14 is ensured. Therefore, deformation of the casing body 14 is prevented.

Especially during charging, the unit cells held by the cell holder 30 generate heat. Accordingly, the cell holder 30 accumulates heat. This heat is quickly absorbed by the heat transfer sheet 42. The heat is further transferred from the heat transfer sheet 42 to the trapezoidal protruding portion 50 via the insulating sheet 44. The trapezoidal protruding portion 50 is integrally formed with the casing body 14, and is made of aluminum alloy and suchlike as the casing body 14. Aluminum alloy is a good thermal conductor. In addition, since the trapezoidal protruding portion 50 extends over a wide range in the vertical direction of the casing body 14, the contact area of the flat surface 60 of the trapezoidal protruding portion 50 with respect to the core pack 40 is large. For the reasons described above, the heat of the core pack 40 is quickly absorbed by the trapezoidal protruding portion 50.

The trapezoidal protruding portion 50 has a shape that becomes wider as it is further away from the core pack 40. Therefore, heat transferred to the trapezoidal protruding portion 50 easily diffuses as it goes toward the left side portion 14c or the right side portion 14d. Accordingly, heat can be efficiently dispersed and thus heat can be efficiently transferred from the trapezoidal protruding portion 50 toward the left side portion 14c and the right side portion 14d.

Heat that has reached the left side portion 14c or the right side portion 14d dissipates from the left side portion 14c or the right side portion 14d to the atmosphere. Since the casing body 14 is made of a good thermal conductor such as aluminum alloy, the heat of the core pack 40 absorbed by the trapezoidal protruding portion 50 quickly dissipates. As described above, the trapezoidal protruding portion 50 abutting the core pack 40 is provided on the inner wall of the casing 18, whereby it is possible to efficiently remove heat the core pack 40 accumulates can be efficiently removed.

When the core pack 40 is removed from the casing 18 for maintenance or the like, the rising inclining surface 56 serves as a guide for the core pack 40. Also at this removal, the insulating sheet 44 or the heat transfer sheet 42 is prevented from being damaged or broken for the same reasons as described above.

The present invention is not limited to the embodiment described above, and various additional or modified structures may be adopted therein without departing from the scope of the attached claims.

For example, the outside of the cell holder 30 may be surrounded by the insulating sheet 44, and then the outside of the insulating sheet 44 may be surrounded by the heat transfer sheet 42. As described in WO 2019/230879 A1, a waterproof sheet or the like may be further added to the core pack 40.

In this embodiment, the entire periphery of the cell holder 30 is covered with the insulating sheet 44. On the other hand, the plate-shaped insulating sheet may be interposed only between the side surface of the cell holder 30 facing the left side portion 14c or the right side portion 14d of the casing body 14 and the left side portion 14c or the right side portion 14d.

## Claims

1. A battery pack (10) comprising:
a core pack (40) that includes a cell holder (30) holding a cell; and
a casing (18) that houses the core pack,
wherein
an inner wall of the casing (18) is provided with a protruding portion (50) that protrudes toward an outer wall of the cell holder, and
the protruding portion abuts (50) the core pack (40), **characterized in that** the protruding portion (50) has a trapezoidal shape such that the protruding portion (50) becomes wider as it is further away from the core pack (40).

2. The battery pack according to claim 1, wherein the protruding portion (50) extends along a longitudinal direction of the casing (18).

3. The battery pack according to claim 2, wherein one end portion of the protruding portion (50) in the longitudinal direction is an inclining surface (56) inclining toward another end portion in the longitudinal direction.

4. The battery pack according to claim 2 or 3, wherein
a longitudinal dimension of the protruding portion is smaller than a longitudinal dimension of the casing (18), and
an end portion of the protruding portion (50) in the longitudinal direction is disposed at a position away from an end portion of the casing (18) in the longitudinal direction.

5. The battery pack according to claim 1, wherein a corner portion of the protruding portion (50) is a curving portion (62).

6. The battery pack according to any one of claims 1 to 5, wherein a portion of the protruding portion (50) that abuts the core pack (40) is a flat surface.

## Patentansprüche

1. Batteriepack (10), umfassend:
ein Kernpack (40), das einen eine Zelle haltenden Zellhalter (30) enthält; und
ein Gehäuse (18), das das Kernpack aufnimmt, wobei
eine Innenwand des Gehäuses (18) mit einem vorstehenden Abschnitt (50) versehen ist, der zu einer Außenwand des Zellhalters hin vorsteht, und
der vorstehende Abschnitt (50) das Kernpack (40) stützt,
**dadurch gekennzeichnet, dass** der vorstehende Abschnitt (50) eine trapezartige Form hat, sodass der vorstehende Abschnitt (50) mit zunehmendem Abstand von dem Kernpack (40) breiter wird.

2. Das Batteriepack nach Anspruch 1, wobei sich der vorstehende Abschnitt (50) entlang einer Längsrichtung des Gehäuses (18) erstreckt.

3. Das Batteriepack nach Anspruch 2, wobei ein Endabschnitt des vorstehenden Abschnitts (50) in der Längsrichtung eine Schrägfläche (56) ist, die in der Längsrichtung zum anderen Endabschnitt hin geneigt ist.

4. Das Batteriepack nach Anspruch 2 oder 3, wobei eine Längsabmessung des vorstehenden Abschnitts (50) kleiner ist als eine Längsabmessung des Gehäuses (18), und
ein Endabschnitt des vorstehenden Abschnitts (50) in der Längsrichtung an einer Position angeordnet ist, die in der Längsrichtung von einem Endabschnitt des Gehäuses (18) entfernt ist.

5. Das Batteriepack nach Anspruch 1, wobei ein Eckabschnitt des vorstehenden Abschnitts (50) ein gekrümmter Abschnitt (62) ist.

6. Das Batteriepack nach einem der Ansprüche 1 bis 5, wobei ein Abschnitt des vorstehenden Abschnitts (50), der das Kernpack (40) stützt, eine flache Oberfläche ist.

## Revendications

1. Bloc-batterie (10) comportant :
un bloc central (40) qui inclut un support d'élément (30) portant un élément ; et
un boîtier (18) qui accueille le bloc central,
dans lequel
une paroi interne du boîtier (18) est munie d'une partie saillante (50) qui fait saillie vers une paroi externe du support d'élément, et
la partie saillante est en butée (50) contre le bloc central (40), **caractérisé en ce que** la partie saillante (50) possède une forme trapézoïdale telle que la partie saillante (50) devient plus large à mesure qu'elle s'éloigne du bloc central (40).

2. Bloc-batterie selon la revendication 1, dans lequel la partie saillante (50) s'étend le long d'une direction longitudinale du boîtier (18).

3. Bloc-batterie selon la revendication 2, dans lequel une partie d'extrémité de la partie saillante (50) dans la direction longitudinale est une surface inclinée (56) qui est inclinée vers une autre partie d'extrémité dans la direction longitudinale.

4. Bloc-batterie selon la revendication 2 ou 3, dans lequel une dimension longitudinale de la partie saillante est plus petite qu'une dimension longitudinale du boîtier (18), et
une partie d'extrémité de la partie saillante (50) dans la direction longitudinale est disposée à une position éloignée d'une partie d'extrémité du boîtier (18) dans la direction longitudinale.

5. Bloc-batterie selon la revendication 1, dans lequel une partie de coin de la partie saillante (50) est une partie incurvée (62).

6. Bloc-batterie selon l'une quelconque des revendications 1 à 5, dans lequel une partie de la partie saillante (50) qui est en butée contre le bloc central (40) est une surface plate.
